# EUROPÄISCHE PATENTSCHRIFT

(11) **EP 3 776 148 B1**
(45) Veröffentlichungstag und Bekanntmachung des Hinweises auf die Patenterteilung: **21.09.2022**
(21) Anmeldenummer: 19727287.5
(22) Anmeldetag: 13.03.2019
(51) Int. Cl.: G06F 3/01, G06F 3/0481

(54) **VERFAHREN ZUM EINBLENDEN EINES VIRTUELLEN OBJEKTS**
METHOD FOR INSERTING A VIRTUAL OBJECT
PROCÉDÉ D'AFFICHAGE D'UN OBJET VIRTUEL

(30) Priorität: 04.04.2018 AT 502692018
(43) Veröffentlichungstag der Anmeldung: 17.02.2021
(73) Patentinhaber: Peterseil, Thomas, 4052 Ansfelden (AT)
(72) Erfinder: KRAUSS, Oliver, 4232 Hagenberg (AT); PETERSEIL, Thomas, 4052 Ansfelden (AT)
(74) Vertreter: KLIMENT & HENHAPEL
(86) Internationale Anmeldenummer: PCT/EP2019/056343
(87) Internationale Veröffentlichungsnummer: WO 2019/192815

(56) Entgegenhaltungen:
- WO-A2-2013/049248
- RU-C2- 2 614 930
- US-A1- 2007 024 527
- US-A1- 2012 114 178
- US-A1- 2014 002 486
- US-A1- 2015 235 398
- US-A1- 2018 082 117

## Beschreibung

Die Erfindung bezieht sich auf ein Verfahren zum Einblenden eines computergenerierten, virtuellen Objektes in das von einer Person wahrgenommene Blickfeld einer realen Umgebung, insbesondere in das Sichtfeld einer transparenten Datenbrille, wobei das Einblenden des virtuellen Objekts in Abhängigkeit von der momentanen Position und Blickrichtung der Person erfolgt, gemäß dem Oberbegriff von Anspruch 1.

Verfahren dieser Art werden in so genannten "Mixed-Reality"-Systemen oder "Augmented Reality (AR)"-Systemen verwendet und etwa in der US 2014/002486 A1 beschrieben. Hierbei erfolgt das Einblenden eines computergenerierten, virtuellen Objektes in das von einer Person wahrgenommene Blickfeld einer realen Umgebung in Abhängigkeit von der momentanen Position und Blickrichtung der Person, für deren Bestimmung in herkömmlicher Weise unterschiedliche Sensoren wie Beschleunigungssensoren (Accelerometer oder G-Sensoren), mitunter auch in Kombination mit Magnetometern und/oder Gyroskopen, sowie GPS-Systeme verwendet werden. Weitere Aspekte solcher Systeme werden in der WO 2013/049248 A2, RU 2 614 930 C2, US 2007/024527 A1, US 2018/082117 A1, US 2015/235398 A1 und der US 2012/114178 A1 beschrieben.

Die momentane Position und Blickrichtung der Person entscheiden zunächst darüber, ob überhaupt ein virtuelles Objekt eingeblendet wird. Das Einblenden des virtuellen Objekts in seiner Positionierung und Größe im Blickfeld der Person wird in weiterer Folge maßgeblich in Abhängigkeit von der momentanen Position der beobachtenden Person vorgenommen.

Dabei stellt sich das Problem, dass die verwendeten Positions- und/oder Bewegungssensoren sowohl einen sehr geringen Messfehler als auch einen permanenten "Drift" oder "Rauschen" im Messsignal aufweisen. Diese Messungenauigkeiten bewirken ein "Herumspringen" der ermittelten Position der Person, auch wenn sich die Person überhaupt nicht bewegt. Für herkömmliche Anwendungen wie beispielsweise Navigationsanwendungen ist diese Unschärfe der Positionsermittlung unerheblich, weil sie vernachlässigbar und für den Anwender letztendlich nicht merkbar ist. Wenn die ermittelte Position aber Grundlage der Berechnung eines einzublendenden Objektes ist, führt diese Unschärfe zu einem "Herumspringen" der eingeblendeten Objekte, das auch als "Jitter" bezeichnet wird. Bei naher Positionierung des virtuellen Objektes relativ zur Person ist dieser "Jitter" kaum merkbar, etwa bei Anwendungen im Indoor-Bereich. Bei hohen Distanzen zwischen dem einzublendenden virtuellen Objekt und der beobachtenden Person äußert sich dieser "Jitter" allerdings in einem sichtbaren "Herumspringen" des virtuellen Objektes, was die beobachtende Person stark irritiert und bis zu Kopfschmerzen und Übelkeit führen kann.

Das Ziel der vorliegenden Erfindung besteht somit darin diese Nachteile zu beseitigen und ein Verfahren zum Einblenden eines computergenerierten, virtuellen Objektes in das von einer Person wahrgenommene Blickfeld einer realen Umgebung bereitzustellen, mit dem das Einblenden des virtuellen Objekts verbessert wird und ein "Jitter" beseitigt werden kann.

Dieses Ziel wird mit den Merkmalen von Anspruch 1 erreicht. Anspruch 1 bezieht sich dabei auf ein Verfahren zum Einblenden eines computergenerierten, virtuellen Objektes in das von einer Person wahrgenommene Blickfeld einer realen Umgebung, insbesondere in das Sichtfeld einer transparenten Datenbrille, wobei das Einblenden des virtuellen Objekts in Abhängigkeit von der momentanen Position und Blickrichtung der Person erfolgt, und mittels einer Kamera in einem vorgegebenen zeitlichen Abstand eine Abfolge von Kamerabildern der von der Person wahrgenommenen, realen Umgebung aufgenommen wird, und mithilfe an sich bekannter Verfahren zur Verfolgung von Bildmerkmalen zwischen einem aufgenommenen Kamerabild und einem einer bekannten Position der Person zugeordneten Referenzbild ein Verschiebungsvektor anhand der Bildmerkmale ermittelt wird, wobei bei Unterschreiten eines vorgegebenen Verschiebungswertes des Verschiebungsvektors das virtuelle Objekt anhand der dem entsprechenden Referenzbild zugeordneten, bekannten Position der Person als momentane Position und Blickrichtung der Person eingeblendet wird.

Erfindungsgemäß wird hierbei vorgeschlagen, dass eine Ermittlung der momentanen Position und Blickrichtung der Person mittels Positions- und/oder Bewegungssensoren erfolgt, und zwischen zwei aufeinander folgenden Kamerabildern der Abfolge von Kamerabildern der von der Person wahrgenommenen, realen Umgebung ein Verschiebungsvektor ermittelt wird, wobei bei Überschreiten eines vorgegebenen Verschiebungswertes des Verschiebungsvektors das virtuelle Objekt anhand der mittels der Positions- und/oder Bewegungssensoren ermittelten Position als momentane Position der Person eingeblendet wird, und bei Unterschreiten eines vorgegebenen Verschiebungswertes bei einer mittels der Positions- und/oder Bewegungssensoren ermittelten, momentanen Position der Person ein Kamerabild der von der Person wahrgenommenen, realen Umgebung als Referenzbild aufgenommen und der mittels der Positions- und/oder Bewegungssensoren ermittelten, momentanen Position der Person zugeordnet wird.

Erfindungsgemäß werden somit AR-Systeme mit an sich bekannten Verfahren der Bildverarbeitung ergänzt. Dabei wird die Datenbrille um eine Kamera ergänzt, oder eine bereits eingebaute Kamera verwendet. Für die Positionsstabilisierung des einzublendenden virtuellen Objekts werden Referenzbilder verwendet, die den sich der Person bietenden Ansichten eines Raumbereiches, in das das virtuelle Objekt eingeblendet werden soll, entsprechen. Die Kamera der Datenbrille nimmt Kamerabilder der von der Person wahrgenommenen, realen Umgebung auf. Eine Rechnereinheit vergleicht anhand bekannter Methoden der Bildverarbeitung diese Kamerabilder mit den Referenzbilder. Falls mithilfe dieser Methoden festgestellt wird, dass das aufgenommene Kamerabild im Wesentlichen deckungsgleich mit einem Referenzbild ist, also ein anhand von Bildmerkmalen ermittelter Verschiebungswert einen vorgegebenen Verschiebungswert unterschreitet, wird die diesem Referenzbild zugeordnete, bekannte Position der Person als momentane Position der Person für das Einblenden des virtuellen Objektes herangezogen. Das Einblenden erfolgt somit anhand einer festgelegten Position, sodass auch die Position des eingeblendeten, virtuellen Objektes stabilisiert und ein "Jitter" beseitigt wird.

Als "Datenbrille" wird im Rahmen der vorliegenden Anmeldung eine wie eine Brille getragene Vorrichtung verstanden, die in der Lage ist virtuelle, vorzugsweise dreidimensionale Objekte in der realen Welt anzuzeigen und diese Objekte in Relation zu realen Objekten im Raum zu positionieren. Solche Datenbrillen werden auch als "Augmented-Reality"-Brillen oder "Mixed-Reality"-Brillen bezeichnet. Eine Person, die eine solche Brille aufgesetzt hat, sieht die Umgebung wie durch eine normale Sehbrille, allerdings können ihr (holographisch virtuelle) Objekte in das Sichtfeld eingeblendet werden.

Die Erstellung der erfindungsgemäß erforderlichen Referenzbilder erfolgt automatisiert, allerdings nur dann, wenn der Verschiebungswert zweier aufeinander folgender Kamerabilder einen vorgegebenen Verschiebungswert unterschreitet, also sich aufeinander folgende Kamerabilder nicht zu sehr unterscheiden. Diese Maßnahme unterliegt dem Ansatz, dass ein Referenzbild nicht benötigt wird, wenn sich die Person etwa rasch durch das Gelände bewegt, also läuft oder springt, da in diesem Fall ein "Jitter" eines einzublendenden Objekts ohnehin kaum bemerkbar ist und daher eine Stabilisierung nicht erforderlich sein wird. Bei dem hierfür herangezogenen Verschiebungswert kann es sich um denselben oder einen anderen Wert handeln, als bei jenem, der für die Positionsstabilisierung des einzublendenden Objekts verwendet wird. Falls hingegen der Verschiebungswert zweier aufeinander folgender Kamerabilder einen vorgegebenen Verschiebungswert unterschreitet, also sich aufeinander folgende Kamerabilder kaum mehr unterscheiden, würde ein "Jitter" eines einzublendenden Objekts bemerkbar, sodass eine Stabilisierung erforderlich sein kann. In diesem Fall wird ein Kamerabild der von der Person wahrgenommenen, realen Umgebung als Referenzbild aufgenommen und der mittels der Positions- und/oder Bewegungssensoren ermittelten, momentanen Position der Person zugeordnet. Bei diesem Kamerabild kann es sich um ein eigens aufgenommenes Kamerabild handeln, oder um das zuletzt aufgenommene Kamerabild der Abfolge an aufgenommenen Kamerabildern. Auf diese Weise wird das erfindungsgemäß vorgesehene Referenzbild erzeugt, das einer bekannten Position der Person als momentane Position der Person zugeordnet ist. Die Positionsstabilisierung des einzublendenden Objekts kann in weiterer Folge erfindungsgemäß vorgenommen werden.

In einer weiteren Ausführungsform kann schließlich zusätzlich vorgesehen sein, dass der Verschiebungswert des Verschiebungsvektors zweier aufeinander folgender Kamerabilder mit dem Verschiebungswert des mittels der Positions- und/oder Bewegungssensoren ermittelten Positionsänderung verglichen wird, wobei bei Gleichheit der Verschiebungsvektoren das virtuelle Objekt anhand der mittels der Positions- und/oder Bewegungssensoren ermittelten Position als momentane Position der Person eingeblendet wird, und bei Ungleichheit der Verschiebungsvektoren die dem Referenzbild zugeordnete Position für das Einblenden des virtuellen Objekts verwendet wird.

Die Erfindung wird in weiterer Folgen anhand von Ausführungsbeispielen mithilfe der beiliegenden Figuren näher erläutert. Es zeigen hierbei die
Fig. 1 eine schematische Darstellung eines Verfahrens, welches nicht erfindungsgemäß ist und wobei der Bewegungspfad der Person vorgegeben ist, und die
Fig. 2 eine schematische Darstellung einer Ausführungsform des erfindungsgemäßen Verfahrens, wobei eine freie Bewegung der Person im Gelände ermöglicht wird.

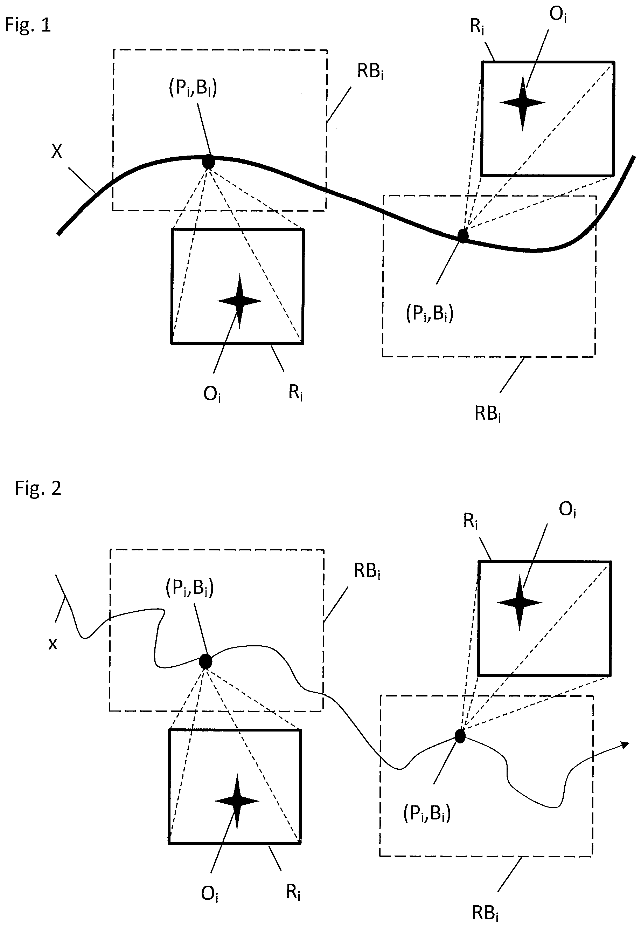

Zunächst wird auf die Fig. 1 Bezug genommen. Eine Person bewegt sich hierbei auf einem vorgegebenen Bewegungspfad X, sodass die Ansichten der von der Person wahrgenommenen, realen Umgebung vorhersehbar sind. An bestimmten, vorgegebenen Koordinaten soll ein virtuelles Objekt Oi (i=1, 2, ...N) in das Sichtfeld einer von der Person getragenen Datenbrille eingeblendet werden. Das Einblenden des virtuellen Objekts Oi erfolgt immer dann, wenn die Person einen Raumbereich betrachtet, in den die Koordinaten des einzublenden Objekts Oi liegen, und die momentane Position Pi der Person innerhalb eines vorgegebenen Referenzbereiches RBi liegt, oder die Person eine bestimmte, vorgegebene Position Pi erreicht hat. Wenn eine innerhalb des Referenzbereiches RBi befindliche Person einen Raumbereich betrachtet, in dem die Koordinaten des einzublenden Objekts Oi liegen, bietet sich ihr eine Ansicht, die im Wesentlichen vorhersehbar ist, insbesondere bei hohen Distanzen zwischen der Person und dem einzublendenden virtuellen Objekt Oi. Von diesen Ansichten können von bekannten Positionen Pi und für bekannte Blickrichtungen Bi Referenzbilder Ri manuell angefertigt und in einer Datenbank hinterlegt werden. Diesen Referenzbildern Ri werden die jeweiligen, bekannten Positionen Pi zugeordnet.

Begibt sich nun eine Person auf den Bewegungspfad X, so wird zunächst nach dem Einschalten der Datenbrille eine Kalibrierung vorgenommen, indem mittels Positions- und/oder Bewegungssensoren die momentane Position Pi und Blickrichtung Bi der zunächst ruhenden Person bestimmt wird. Ausgehend von der bekannten, anfänglichen Position Pi und Blickrichtung Bi wird in weiterer Folge in herkömmlicher Weise mittels unterschiedlicher Sensoren wie Beschleunigungssensoren (Accelerometer oder G-Sensoren), mitunter auch in Kombination mit Magnetometern und/oder Gyroskopen, sowie GPS-Systemen Änderungen der Position Pi und der Blickrichtung Bi gemessen und die jeweilige momentane Position Pi und Blickrichtung Bi ermittelt. Zusätzlich nimmt eine beispielsweise an der Datenbrille montierte Kamera Kamerabilder der von der Person durch die Datenbrille wahrgenommenen, realen Umgebung auf. Bewegt sich nun die Person entlang des vorgegebenen Bewegungspfades X, nimmt die Kamera in vorgegebenen zeitlichen Abständen Kamerabilder der von der Person wahrgenommenen, realen Umgebung auf, beispielsweise im Abstand von einer Sekunde. Die Ermittlung der momentanen Position Pi und Blickrichtung Bi der Person mittels der Positions- und/oder Bewegungssensoren erfolgt in der Regel ungleich schneller, beispielsweise im Abstand von Zehntelsekunden, allerdings mit den oben erwähnten Messfehlern. Eine Rechnereinheit vergleicht anhand bekannter Methoden der Bildverarbeitung diese Kamerabilder mit den Referenzbildern Ri. Die durch die Kamera ermittelten Bilder werden hierfür digitalisiert, und vorzugsweise bekannten Verfahren zur Bildaufbereitung, wie Konvertierung in Schwarz-Weiß-Bilder, Datenkomprimierung, Korrektur von Linsenfehlern, sowie Korrektur von Schattenanomalien, unterzogen, wofür ebenfalls hinlänglich bekannte Software zur Verfügung steht. Die so aufbereiteten Bilder werden schließlich bekannten Verfahren zur Positionsermittlung unterzogen, die etwa auf den bekannten Verfahren des "stereo matching", oder dem Kanade-Lucas-Tomasi (KLT)-Verfahren beruhen. Auch hierfür ist entsprechende Software verfügbar, die aus der Lageänderung von Bildmerkmalen in zeitlich aufeinander folgenden Bildsequenzen Verschiebungsvektoren ermittelt.

Falls mithilfe dieser Methoden festgestellt wird, dass das aufgenommene Kamerabild im Wesentlichen deckungsgleich mit einem Referenzbild Ri ist, also ein anhand von Bildmerkmalen ermittelter Verschiebungswert einen vorgegebenen Verschiebungswert unterschreitet, wird die diesem Referenzbild Ri zugeordnete, bekannte Position Pi der Person als momentane Position Pi der Person für das Einblenden des virtuellen Objektes herangezogen. Das Einblenden erfolgt somit anhand einer festgelegten Position Pi, sodass auch die Position Pi des eingeblendeten, virtuellen Objektes Oi stabilisiert und ein "Jitter" beseitigt wird. Das Einblenden eines virtuellen Objekts Oi erfolgt somit anhand einer Kombination von herkömmlichen Positions- und/oder Bewegungssensoren und Methoden der Bildverarbeitung.

Wie bereits erwähnt wurde, könnte die Aufgabe der wiederholten Ermittlung der momentanen Position Pi und Blickrichtung Bi entlang des Bewegungspfades X der Person grundsätzlich mithilfe der Abfolge aufgenommener Kamerabilder erfolgen, sofern die Startposition bekannt ist. Die hierfür erforderlichen Verfahren der Bildverarbeitung aufgenommener Kamerabilder, bei denen die Verschiebung zweier aufeinander folgender Kamerabilder analysiert und daraus die Positionsänderung ermittelt wird, sind an sich verfügbar, erfordern allerdings einen vergleichsweise hohen Rechenaufwand, sodass gemäß der beschriebenen Ausführungsvariante die Anwendung der Methoden der Bildverarbeitung selektiv erfolgt, nämlich nur dann, wenn ein Einblenden des virtuellen Objektes Oi bevorsteht, beispielsweise wenn die Person einen Referenzbereich RBi erreicht hat. Die Ermittlung der momentanen Position Pi und der Blickrichtung Bi der Person erfolgt somit mittels herkömmlicher Positions- und/oder Bewegungssensoren, wobei anhand der mittels der Positions- und/oder Bewegungssensoren ermittelten, momentanen Position Pi der Person eine Auswahl eines Referenzbildes Ri aus einer Mehrzahl vorgegebener Referenzbilder Ri erfolgt und die Ermittlung von Verschiebungsvektoren mithilfe von bekannten Methoden der Bildverarbeitung initiiert wird. Das Einblenden des virtuellen Objekts Oi erfolgt in weiterer Folge anhand der bekannten, dem jeweiligen Referenzbild Ri zugeordneten Position Pi. Auf diese Weise kann die erforderliche Rechenleistung für die Stabilisierung des einzublendenden, virtuellen Objekts Oi erheblich reduziert werden.

Um eine freie Bewegung der Person im Gelände zu ermöglichen, wird eine erfindungsgemäße Ausführungsform vorgeschlagen, die anhand der Fig. 2 erläutert wird. Hierbei bewegt sich die Person nicht mehr auf einem vorgegebenen Bewegungspfad X, sondern auf einem frei wählbaren Bewegungspfad x. Die erfindungsgemäß vorgesehenen Referenzbilder Ri können somit nicht mehr in einer Datenbank vorgegeben werden, sondern müssen automatisiert erstellt werden. Beim Start wird zunächst nach dem Einschalten der Datenbrille wiederum eine Kalibrierung vorgenommen, indem mittels Positions- und/oder Bewegungssensoren die momentane Position Pi und Blickrichtung Bi der zunächst ruhenden Person bestimmt wird. Ausgehend von der bekannten, anfänglichen Position Pi und Blickrichtung Bi wird in weiterer Folge in herkömmlicher Weise mittels unterschiedlicher Sensoren wie Beschleunigungssensoren (Accelerometer oder G-Sensoren), mitunter auch in Kombination mit Magnetometern und/oder Gyroskopen, sowie GPS-Systemen Änderungen der Position Pi und der Blickrichtung Bi gemessen und die jeweilige momentane Position Pi und Blickrichtung Bi ermittelt. Zusätzlich nimmt eine beispielsweise an der Datenbrille montierte Kamera beim Start zunächst ein erstes Kalibrierungsbild auf. Bewegt sich die Person durch das Gelände, nimmt die Kamera in weiterer Folge Kamerabilder der von der Person durch die Datenbrille wahrgenommenen, realen Umgebung in vorgegebenen zeitlichen Abständen auf, beispielsweise im Abstand von einer Sekunde. Auf diese Weise wird eine Abfolge von Kamerabildern erzeugt. Die Ermittlung der momentanen Position Pi und Blickrichtung Bi der Person mittels der Positions- und/oder Bewegungssensoren erfolgt in der Regel ungleich schneller, beispielsweise im Abstand von Zehntelsekunden, allerdings mit den oben erwähnten Messfehlern.

Zusätzlich wird zwischen zwei aufeinander folgenden Kamerabildern der Abfolge von Kamerabildern der von der Person wahrgenommenen, realen Umgebung ein Verschiebungsvektor ermittelt, wobei bei Überschreiten eines vorgegebenen Verschiebungswertes des Verschiebungsvektors die mittels der Positions- und/oder Bewegungssensoren ermittelte Position Pi als momentane Position der Person herangezogen wird und insbesondere für das Einblenden eines virtuellen Objekts Oi verwendet wird. Bei Unterschreiten eines vorgegebenen Verschiebungswertes wird ein Kamerabild der von der Person wahrgenommenen, realen Umgebung als Referenzbild Ri aufgenommen und diesem Referenzbild Ri die mittels der Positions- und/oder Bewegungssensoren ermittelte, momentane Position der Person zugeordnet. Die Erstellung der erfindungsgemäß erforderlichen Referenzbilder Ri erfolgt somit automatisiert, allerdings nur dann, wenn der Verschiebungswert zweier aufeinander folgender Kamerabilder einen vorgegebenen Verschiebungswert unterschreitet, also sich aufeinander folgende Kamerabilder nicht zu sehr unterscheiden. Bei diesem Kamerabild kann es sich um ein eigens aufgenommenes Kamerabild handeln, oder um das zuletzt aufgenommene Kamerabild der Abfolge an aufgenommenen Kamerabildern. Auf diese Weise wird das erfindungsgemäß vorgesehene Referenzbild Ri erzeugt, das einer bekannten Position der Person als momentane Position Pi der Person zugeordnet ist. Die Positionsstabilisierung des einzublendenden Objekts kann in weiterer Folge erfindungsgemäß vorgenommen werden, indem die dem Referenzbild Ri zugeordnete Position Pi verwendet wird. In einer weiteren Ausführungsform kann der Verschiebungswert des Verschiebungsvektors zweier aufeinander folgender Kamerabilder mit dem Verschiebungswert des mittels der Positions- und/oder Bewegungssensoren ermittelten Positionsänderung verglichen werden. Falls die Verschiebungsvektoren gleich sind, kann auch weiterhin der mittels der Positions- und/oder Bewegungssensoren ermittelten, momentanen Position Pi vertraut werden und für das Einblenden eins virtuellen Objekts Oi verwendet werden. Nur dann, wenn die Verschiebungsvektoren unterschiedlich sind, wird den mittels der Positions- und/oder Bewegungssensoren ermittelten, momentanen Position Pi nicht mehr vertraut und stattdessen die dem Referenzbild Ri zugeordnete Position Pi für das Einblenden eins virtuellen Objekts Oi verwendet.

## Patentansprüche

1. Verfahren zum Einblenden eines computergenerierten, virtuellen Objektes (Oi; i=1, 2, ... N)) in das von einer Person wahrgenommene Blickfeld einer realen Umgebung, insbesondere in das Sichtfeld einer transparenten Datenbrille, wobei das Einblenden des virtuellen Objekts (Oi) in Abhängigkeit von der momentanen Position (Pi) und Blickrichtung (Bi) der Person erfolgt, und mittels einer Kamera in einem vorgegebenen zeitlichen Abstand eine Abfolge von Kamerabildern der von der Person wahrgenommenen, realen Umgebung aufgenommen wird, und mithilfe an sich bekannter Verfahren zur Verfolgung von Bildmerkmalen zwischen einem aufgenommenen Kamerabild und einem einer bekannten Position (Pi) der Person zugeordneten Referenzbild (Ri) ein Verschiebungsvektor anhand der Bildmerkmale ermittelt wird, wobei bei Unterschreiten eines vorgegebenen Verschiebungswertes des Verschiebungsvektors das virtuelle Objekt (Oi) anhand der dem entsprechenden Referenzbild (Ri) zugeordneten, bekannten Position (Pi) der Person als momentane Position (Pi) der Person eingeblendet wird, **dadurch gekennzeichnet, dass** eine Ermittlung der momentanen Position (Pi) und Blickrichtung (Bi) der Person mittels Positions- und/oder Bewegungssensoren erfolgt, und zwischen zwei aufeinander folgenden Kamerabildern der Abfolge von Kamerabildern der von der Person wahrgenommenen, realen Umgebung ein Verschiebungsvektor ermittelt wird, wobei bei Überschreiten eines vorgegebenen Verschiebungswertes des Verschiebungsvektors das virtuelle Objekt (Oi) anhand der mittels der Positions- und/oder Bewegungssensoren ermittelten Position (Pi) als momentane Position (Pi) der Person eingeblendet wird, und bei Unterschreiten eines vorgegebenen Verschiebungswertes bei einer mittels der Positions- und/oder Bewegungssensoren ermittelten, momentanen Position (Pi) der Person ein Kamerabild der von der Person wahrgenommenen, realen Umgebung als Referenzbild (Ri) aufgenommen und der mittels der Positions- und/oder Bewegungssensoren ermittelten, momentanen Position (Pi) der Person zugeordnet wird.

2. Verfahren nach Anspruch 1, **dadurch gekennzeichnet, dass** der Verschiebungswert des Verschiebungsvektors zweier aufeinander folgender Kamerabilder mit dem Verschiebungswert des mittels der Positions- und/oder Bewegungssensoren ermittelten Positionsänderung verglichen wird, wobei bei Gleichheit der Verschiebungsvektoren das virtuelle Objekt (Oi) anhand der mittels der Positions- und/oder Bewegungssensoren ermittelten Position (Pi) als momentane Position (Pi) der Person eingeblendet wird, und bei Ungleichheit der Verschiebungsvektoren die dem Referenzbild (Ri) zugeordnete Position (Pi) für das Einblenden des virtuellen Objekts (Oi) verwendet wird.

## Claims

1. Method for inserting a computer-generated virtual object (Oi; i=1, 2, ... N) ) into the field of view of a real environment perceived by a person, in particular into the field of view of transparent data glasses, wherein the insertion of the virtual object (Oi) takes place as a function of the current position (Pi) and line of vision (Bi) of the person, and a sequence of camera images of the real environment perceived by the person is recorded by means of a camera at a predetermined time interval, and with the aid of methods known per se for tracking image features between a recorded camera image and a reference image (Ri) associated with a known position (Pi) of the person, a displacement vector is determined on the basis of the image features, wherein, when the displacement value of the displacement vector falls below a predetermined displacement value, the virtual object (Oi) is inserted on the basis of the known position (Pi) of the person associated with the corresponding reference image (Ri) as the current position (Pi) of the person, **characterized in that** the current position (Pi) and line of vision (Bi) of the person are determined by means of position and/or motion sensors, and a displacement vector is determined between two successive camera images of the sequence of camera images of the real environment perceived by the person, wherein the virtual object (Oi) is inserted on the basis of the position (Pi) determined by means of the position and/or motion sensors as the current position (Pi) of the person when a predetermined displacement value of the displacement vector is exceeded, and if the displacement falls below a predetermined displacement value at an current position (Pi) of the person determined by means of the position and/or motion sensors, a camera image of the real environment perceived by the person is recorded as a reference image (Ri) and associated with the current position (Pi) of the person determined by means of the position and/or motion sensors.

2. Method according to claim 1, **characterized in that** the displacement value of the displacement vector of two successive camera images is compared with the displacement value of the change in position determined by means of the position and/or motion sensors, wherein, if the displacement vectors are equal, the virtual object (Oi) is inserted on the basis of the position (Pi) determined by means of the position and/or motion sensors as the current position (Pi) of the person, and, if the displacement vectors are not equal, the position (Pi) associated with the reference image (Ri) is used for inserting the virtual object (Oi).

## Revendications

1. Procédé pour incruster un objet virtuel (Oi ; i = 1, 2... N) généré par un ordinateur dans le champ visuel d'un environnement réel perçu par une personne, en particulier dans le champ visuel de lunettes connectées transparentes, dans lequel l'incrustation de l'objet visuel (Oi) dépend de la position (Pi) et de la direction du regard (Bi) instantanées de la personne et une série d'images de l'environnement réel perçu par la personne est acquise au moyen d'une caméra à des intervalles prédéfinis dans le temps, et un vecteur de déplacement est déterminé à l'aide d'un procédé connu pour le suivi de caractéristiques d'image entre une image de la caméra et une image de référence (Ri) associée à une position (Pi) connue de la personne à partir des caractéristiques d'image, l'objet virtuel (Oi) étant incrusté lorsqu'une valeur de déplacement prédéfinie du vecteur de déplacement n'est pas atteinte, à l'aide de la position connue (Pi) de la personne associée à l'image de référence (Ri) correspondante servant de position instantanée (Pi) de la personne, **caractérisé en ce que** la position instantanée (Pi) et la direction du regard (Bi) de la personne sont déterminées au moyen de capteurs de position et/ou de mouvement et un vecteur de déplacement est déterminé entre deux images successives de la caméra parmi la série d'images de l'environnement réel perçu par la personne, l'objet virtuel (Oi) étant incrusté lorsqu'une valeur de déplacement prédéfinie du vecteur de déplacement est dépassée, à l'aide de la position connue (Pi) servant de position instantanée (Pi) de la personne déterminée au moyen des capteurs de position et/ou de mouvement et, lorsqu'une valeur de déplacement prédéterminée n'est pas atteinte dans une position instantanée (Pi) de la personne déterminée au moyen des capteurs de position et/ou de mouvement, une image de caméra de l'environnement réel perçu par la personne est acquise pour servir d'image de référence (Ri) et associée à la position instantanée (Pi) acquise au moyen des capteurs de position et/ou de mouvement.

2. Procédé selon la revendication 1, **caractérisée en ce que** la valeur de déplacement du vecteur de déplacement de deux images de caméra successives est comparée à la valeur de déplacement du changement de position déterminé au moyen des capteurs de position et/ou de mouvement, l'objet virtuel (Oi) étant incrusté, si les vecteurs de déplacement sont égaux, à l'aide de la position (Pi) déterminée au moyen des capteurs de position et/ou de mouvement servant de position instantanée (Pi) de la personne et, si les vecteurs de déplacement ne sont pas égaux, la position (Pi) associée à l'image de référence (Ri) est utilisée pour incruster l'objet virtuel (Oi).
